# EUROPÄISCHE PATENTANMELDUNG

(11) **EP 1 168 800 A2**
(43) Veröffentlichungstag der Anmeldung: **02.01.2002**
(21) Anmeldenummer: 01440108.7
(22) Anmeldetag: 17.04.2001
(51) Int. Cl.: H04M 9/08

(54) **Telefonieren und Freisprechen für schnurlose Endgeräte mit Echokompensation**

(30) Priorität: 21.06.2000 DE 10030548
(71) Anmelder: ALCATEL, 75008 Paris (FR)
(72) Erfinder: Matt, Hans Jürgen, 71686 Remseck (DE); Walker, Michael, 73666 Baltmannsweiler (DE)
(74) Vertreter: KOHLER SCHMID + PARTNER

(57) **Zusammenfassung**

Ein Verfahren zum Betrieb eines schnurlosen TK-Endgeräts mit einer Einrichtung zur Kompensation akustischer Echos zwischen Lautsprecher und Mikrophon umfasst folgende Schritte:
(a) Definieren von verschiedenen Betriebssituationen (Bi) des TK-Endgeräts;
(b) Ermitteln von Parametersätzen (Pi) für die Kompensation akustischer Echos für jede Betriebssituation (Bi) und Abspeichern in einer Speichereinheit, auf die das TK-Endgerät Zugriffsmöglichkeit hat;
(c) Auswahl der aktuellen Betriebssituation (Bj) nach Einschalten des TK-Endgeräts oder bei einem Wechsel der Betriebssituation;
(d) Laden des zur aktuellen Betriebssituation (Bj) gehörenden Parametersatzes (Pj) aus der Speichereinheit in die Einrichtung zur Kompensation akustischer Echos und Durchführen der Echokompensation mit dem geladenen Parametersatz (Pj) als Startwert.

Damit lässt sich die Sprachqualität erheblich verbessern. Insbesondere kann eine schnelle Anpassung an die momentane Gesprächs- bzw. Betriebssituation erfolgen und damit die Funktion des Freisprechens effizienter und betriebssicherer ausgeführt werden. Auch trägt das Verfahren dazu bei, ein Rückkopplungspfeifen und eine Halligkeit zu vermeiden und ein Voll-Duplexverfahren sowie einen reduzierten Geräuschpegel zu ermöglichen.

## Beschreibung

Die Erfindung betrifft ein Verfahren zum Betrieb eines schnurlosen Telekommunikations (=TK)-Endgeräts, insbesondere eines Mobiltelefons, mit einer Einrichtung zur Kompensation akustischer Echos zwischen Lautsprecher und Mikrophon des TK-Endgeräts sowie Hardware-Baugruppen zur Durchführung des Verfahrens.

Schnurlose Telefone, insbesondere mobile Telefone finden immer größere Verbreitung. Um bei ständig kleineren Abmessungen der Geräte und damit zunehmender akustischer Kopplung vom Lautsprecher auf das Mikrofon eine vernünftige Qualität der Kommunikation zu erreichen, besitzen diese Geräte regelmäßig Einrichtungen zur Kompensation akustischer Echos. Die Technik der adaptiven Filter zur Echokompensation ist beispielsweise beschrieben in der DE 44 30 189 A1.

Zur Erhöhung des Komforts in der Handhabung schnurloser TK-Endgeräte weisen diese neuerdings auch Einrichtungen zum Freisprechen auf. Freisprechen bedeutet eine Form der Sprach-Kommunikation, bei der der Lautsprecher des Endgeräts sehr laut geschaltet werden kann, wobei das Gerät z.B. auf einem Tisch steht und der Benutzer "frei sprechen kann", d.h. ohne einen Handapparat an sein Ohr halten zu müssen.

Bei dieser Form der Kommunikation tritt eine besonders starke Kopplung vom Lautsprecher zum Mikrofon auf, weil wegen der größeren Lautstärke des Lautsprechers ein stärkeres Signal vom Lautsprecher auf das Mikrofon gelangt als das Signal des lokalen Sprechers. Es kann dann zu dem unangenehmen Rückkopplungspfeifen kommen, das eine Kommunikation unmöglich macht. Ferner kann es sein, dass die Kommunikation dadurch gestört wird, weil die Anlage zwar gerade noch nicht pfeift, aber sehr hallig wirkt, d.h. Wortfetzen können stark nachhallen.

Neuerdings werden mobile Telefonendgeräte immer kleiner. Damit rücken zwangsläufig Lautsprecher und Mikrofon immer näher zusammen und es kommt dazu, dass das Signal des lokalen Sprechers, und dass dadurch das Signal des Mikrofons das gewünschte Signal des lokalen Sprechers nur schwach enthält, aber leider das störende Signal vom Lautsprecher sehr stark. Besonders kleine Handys kommen daher ohne zusätzliche Maßnahmen nicht mehr aus. Sie wären nicht nutzbar, wenn es nicht ein Bündel von Maßnahmen gäbe, um diese akustische Kopplung vom Lautsprecher zum Mikrofon soweit zu reduzieren, dass ein Betrieb möglich wird.

Zu den bekannten Maßnahmen, um die Lautsprecher - Mikrofon - Kopplung zu verringern gehören
a) die Verwendung von Backelektret Mikrofonen, um Körperschall zu kompensieren;
b) die stark gedämpfte Lagerung von Mikrofon und Lautsprecher im Gehäuse, z.B. auf einem weichen und daher dämpfenden Silikonring;
c) eine möglichst luftdichte Kapselung des Lautsprechers im Gehäuse, um einen akustischen Kurzschluss möglichst zu vermeiden;
d) der Abstand zwischen Lautsprecher und Mikrofon kann vergrößert werden durch eine Klappe, die beim Handy geöffnet werden muss; oder durch einen Abstandsstift für das Mikrofon.
e) Maßnahmen der Signalverarbeitung, z.B. Verwendung von
   1. adaptiven Filtern zur Kompensation der störenden Signalanteile im Mikrofonsignal.
   2. automatischer Aussteuerungsregelung,
   3. hochauflösenden Analog-Digitalwandlern (>14 bit/Abtastwert),
   4. Softclippern zur Begrenzung von Signalspitzenwerten,
   5. zwei oder mehreren Mikrofonen mit nachfolgender Signalverarbeitung,

Die Methoden der Signalverarbeitung arbeiten nur dann einigermaßen zuverlässig, wenn die analog-digital Wandler (A/D-Wandler) nach dem Mikrofon eine genügend große Auflösung (≈16 bit/Abtastwert) haben, um einerseits die Signalspitzenwerte des Lautsprechersignals am Mikrofon (>110 dB) sauber (ohne Übersteuerung) zu digitalisieren sowie andererseits noch genügend bits für die vergleichsweise schwachen mittleren Signalpegel (≈68 dB) des lokalen Sprechers zur Verfügung zu stellen, damit die Sprache des lokalen Sprechers nicht durch Quantisierungsrauschen zusätzlich an Qualität verliert.

Die Verwendung von adaptiven Filtern zur Echokompensation ist, wie bereits eingangs erwähnt, beispielsweise in der DE 44 30 189 A1 beschrieben.

Wenn ein FIR (= Finite Impulse Response)-Filter mit einem NLMS Algorithmus eingestellt wird, dann kann es kurzzeitig vorkommen, dass die Filterkoeffizienten falsch eingestellt werden, falls
a) kein genügend "spektral weißes Signal" ausgesendet wird,
b) sich das Filter auf ein anderes Signal als das Echo versucht einzustellen, z.B.
   - wenn sinusförmige Töne ausgesendet werden,
   - bei Gegensprechen (double talk nicht richtig oder zu spät erkannt),
   - bei störenden Zusatzgeräuschen,
   - bei nichtlinearen Verzerrungen

Aus diesem Grund wird in der DE 44 30 189 A1 vorgeschlagen, nicht nur eine fortlaufende Bestimmung der Filter-Koeffizienten durchzuführen, sondern zusätzlich eine Bewertung der Qualität der Filter-Koeffizienten und eine Messung des Fehlersignals vorzunehmen. Wenn ein besserer Satz von Filterkoeffizienten gefunden ist, dann wird dieser Satz in das aktive Filter übernommen.

Nachteilig bei den bekannten Verfahren zur Geräuschunterdrückung ist jedoch, dass nach dem Einschalten des TK-Endgerätes und/oder nach einer Änderung der Impulsantwort des Raumes bzw. des Gerätes der Algorithmus zur Einstellung des Filters versucht, eine neue Einstellung zu finden und dazu bei Verwendung der üblichen Algorithmen eine gewisse Zeitspanne benötigt wird, die meist als störend empfunden wird, weil dabei kurze Pfeif- und Quiektöne auftreten können.

Wenn obendrein die akustische Umgebung geräuscherfüllt ist, kann der Filter-Algorithmus die Filterkoeffizienten nicht genau genug bestimmen. Die Zeitdauer bis zu einer Konvergenz ist dann auch noch weiter verlängert.

Wenn ferner beim TK-Endgerät, beispielsweise einem Handy, der Lautsprecher besonders stark klirrt, weil er "voll aufgedreht" ist und das Gehäuse zusätzliche Vibrationen (Schäppern etc.) verursacht, kann der Algorithmus auch keine gute Endeinstellung finden. Die Sprachqualität bleibt dann miserabel.

Aufgabe der vorliegenden Erfindung ist es demgegenüber, ein Verfahren mit den eingangs beschriebenen Merkmalen vorzustellen, bei dem die oben genannten Nachteile bekannter Betriebsverfahren vermieden oder zumindest erheblich abgemildert werden. Insbesondere soll die schnelle Anpassung an die momentane Gesprächssituation bzw. Betriebssituation erfolgen können und damit beispielsweise die Funktion des Freisprechens effizienter und betriebssicherer ausführbar werden. Schließlich soll das Verfahren dazu beitragen, ein Rückkopplungspfeifen und eine Halligkeit zu vermeiden und ein Voll-Duplexverfahren sowie einen reduzierten Geräuschpegel zu ermöglichen.

Erfindungsgemäß wird diese Aufgabe auf ebenso einfache wie wirkungsvolle Art und Weise durch folgende Verfahrensschritte gelöst:
(a) Definieren von verschiedenen Betriebssituationen (Bi) des TK-Endgeräts;
(b) Ermitteln von Parametersätzen (Pi) für die Kompensation akustischer Echos für jede Betriebssituation (Bi) und Abspeichern in einer Speichereinheit, auf die das TK-Endgerät Zugriffsmöglichkeit hat;
(c) Auswahl der aktuellen Betriebssituation (Bj) nach Einschalten des TK-Endgeräts oder bei einem Wechsel der Betriebssituation;
(d) Laden des zur aktuellen Betriebssituation (Bj) gehörenden Parametersatzes (Pj) aus der Speichereinheit in die Einrichtung zur Kompensation akustischer Echos und Durchführen der Echokompensation mit dem geladenen Parametersatz (Pj) als Startwert.

Durch die Definition geeigneter Betriebssituationen und die Ermittlung der zugehöriger optimierter Parametersätze vor Beginn er Echokompensation kann eine erheblich schnellere, effizientere und viel bessere an die aktuelle Situation angepasste Kompensation erfolgen, von der insbesondere die Funktion des Freisprechens besonders profitiert.

Die derzeit wichtigsten drei Betriebsarten eines mobilen Telefons sind die folgenden:
(i) Das Handy wird in der Hand gehalten und lautes Freisprechen eingeschaltet
(ii) Das Handy steht auf dem Tisch und die Freisprecheinrichtung ist eingeschaltet.
(iii) Das Handy wird in einer speziellen Halterung, meist in einem Fahrzeug eingesteckt und auf Freisprechen geschaltet.

Besonders bevorzugt ist daher eine Ausführungsform des erfindungsgemäßen Verfahrens, bei der in Schritt (a) drei übergeordnete Betriebssituationen (Bi) definiert werden, nämlich:
B1 : TK-Endgerät wird vom Benutzer in der Hand gehalten;
B2 : TK-Endgerät liegt oder steht auf einer festen Unterlage;
B3 : TK-Endgerät ist in einer Halterung fixiert.

Der Vorteil dieser Definition besteht darin, dass sie die besonders wichtige Situationen, die häufig in der Praxis vorkommen, nachbildet, und dass für diese technisch sehr unterschiedlichen Situationen entsprechend gute (und in der Praxis meist voneinander sehr unterschiedliche) Parametersätze vorab ermittelt und in einem Speicher abgelegt werden. So kann beispielsweise die Länge des adaptiven Filters zur Echokompensation für die drei oben beschriebenen Betriebsarten deutlich unterschiedlich eingestellt werden, nämlich entsprechend der Länge der Impulsantwort für jede dieser Betriebsarten.

Eine weitere Verbesserung dieser Ausführungsform lässt sich dadurch erreichen, dass in einem Schritt (a1) zu jeder übergeordneten Betriebssituation (B1, B2, B3) mindestens eine untergeordnete Betriebssituation (B11, B12, ...; B21, B22, ...; B31, B32, ...) definiert wird, die die entsprechende übergeordnete Betriebssituation konkretisiert, beispielsweise
B11 : TK-Endgerät wird vom Benutzer ans Ohr gehalten;
B12 : TK-Endgerät wird vom Benutzer vor dem Bauch oder vor der Brust gehalten;
B21 : TK-Endgerät steht auf einem Tisch mit der Bedienseite dem Benutzer zugewandt;
B22 : TK-Endgerät liegt auf einem Tisch mit der Bedienseite nach oben;
B23 : TK-Endgerät liegt auf einem Tisch mit der Bedienseite zum Tisch;
B31 : TK-Endgerät ist in einer Fahrzeughalterung eingesetzt;
B32 : TK-Endgerät ist in einer Ladeschale eingesetzt.

Die Definition dieser zu den übergeordneten Betriebssituationen gehörenden untergeordneten Betriebssituationen dient der Verfeinerung der Parametersätze, um eine noch bessere Freisprech-Sprachqualität zu erhalten.

Bei einer weiteren Bevorzugten Ausführungsform des erfindungsgemäßen Verfahrens wird dass in Schritt (b) zumindest ein Teil der Parametersätze (Pi) rechnerisch, vorzugsweise durch Simulationsrechnungen ermittelt. Eine Simulation auf einem Computer wird in der Regel kostengünstiger sein als langwierige Messungen. Allerdings sollte die Ermittlung geeigneter Parametersätze nur dann mittels Simulation erfolgen, wenn die dabei erreichbare Genauigkeit ausreicht.

Wenn eine Simulation zu unsicher ist, weil beispielsweise ein Teil des Systems sich nicht auf einfache Weise modellieren lässt, oder wenn bereits erhaltene Simulationsergebnisse abgesichert werden sollen, können die Parameter auch messtechnisch nachgeprüft werden. Dazu wird bei einer weiteren Verfahrensvariante in Schritt (b) zumindest ein Teil der Parametersätze (Pi) experimentell, vorzugsweise durch Messung des Betriebsverhaltens eines TK-Endgeräts in den in Schritt (a) bzw. (a1) definierten Betriebssituationen ermittelt.

Eine Weiterbildung dieser Verfahrensvariante zeichnet sich dadurch aus, dass die Parametersätze (Pi) durch Messungen an verschiedenen TK-Endgeräten gleichen Typs und anschließende Mittelung über die gewonnenen Messwerte ermittelt werden. Wenn Systemparameter der verwendeten Mikrofone, Lautsprecher, Gehäuse usw. in der Produktion stark streuen, kann es vorteilhaft sein, derartige Streuungen mittels Messungen zu ermittein, um aus der Verteilung dieser Streuungen einen günstigen Kompromiss für die Parameter zu finden.

Falls verschiedene, aber ähnliche Modelle eines Handys produziert werden, so können derartige Kompromiss-Parametersätze durch Messungen an verschiedenen TK-Endgeräten vergleichbaren, zumindest ähnlichen Typs und anschließende Mittelung über die gewonnenen Messwerte ermittelt werden. je weniger Varianten von Parametersätzen für laufende Produktionen verwendet werden müssen, desto kostengünstiger wird die Produktion und desto geringer wird die Fehlerquote sein.

Weiterhin kann bei diesen Verfahrensvarianten eine nach bestimmten Kriterien gewichtete Mittelung erfolgen. Eine solche gewichtete Mittelung von gemessenen und/oder simulierten Parametersätzen dient der Verringerung der Varianten für einen Produktionsprozess.

Die Mitteilung einer Betriebssituation an die Elektronik des Mobiltelefons kann auf verschiedene Arten erfolgen. Die einfachste und billigste Methode (aber nicht unbedingt immer die beste) ist eine Einstellung per Hand über Tasten, Cursor plus Klick-Befehl oder über einen Sprachbefehl, wenn das Handy Sprachkommandos erkennen kann.

Eine für den Benutzer bequemere und komfortablere, aber technisch schwieriger zu realisierende Methode besteht in einer automatischen Detektion der Betriebssituation und unmittelbaren Mitteilung desselben an die Elektronik.

Zur automatischen Detektion von Betriebssituationen können beispielsweise verschiedene Situationen eingesetzt werden, wie etwa Druck-, Lage-, InfrarotSensoren und andere Arten von Entfernungsdetektoren, die den Abstand des Benutzers zum TK-Endgerät ermitteln können. Je besser die Sensoranordnung arbeitet, desto sicherer wird die Schätzung einer aktuellen Betriebssituation erfolgen können.

Besonders bevorzugt ist auch eine weitere Ausführungsform des erfindungsgemäßen Verfahrens, die sich dadurch auszeichnet, dass mehrere, vorzugsweise alle in Schritt (b) abgespeicherten Parametersätze nacheinander oder parallel geladen werden und damit jeweils eine Kompensation akustischer Echos durchgeführt wird, dass die Ergebnisse der verschiedenen Echokompensationen miteinander verglichen werden, und dass der Parametersatz mit dem besten Ergebnis zur weiteren Kompensation akustischer Echos ausgewählt wird.

Wenn genügend Rechenleistung im TK-Endgerät zur Verfügung steht, kann gegebenenfalls auf zusätzliche Sensoren und den damit verbundenen Kosten-und Fehlerquellen verzichtet werden, indem die Elektronik aus dem Lautsprecher leise ein synthetisches Rauschsignal aussendet und in rascher Folge alle verfügbaren Parametersätze zur Echokompensation durchprobiert und dabei kann dann der für die aktuelle Echokompensation günstigste Parametersatz anhand eines Qualitätsmaßes (beispielsweise Größe des Restechos nach dem adaptiven Filter) ermittelt werden. Damit ist sogleich indirekt die Betriebssituation erkannt.

Um der Elektronik einen möglichst einfachen "Einstieg" zu ermöglichen, kann bei einer Verfahrensvariante als Startwert in Schritt (d) unabhängig von der aktuellen Betriebssituation (Bj) ein beliebiger der gespeicherten Parametersätze (Pi) geladen werden.

Insbesondere kann als Startwert in Schritt (d) unabhängig von der aktuellen Betriebssituation (Bj) der zur Betriebssituation B1 gehörende Parametersatz (P1) geladen werden. Die Ausgangslage, bei der der Benutzer das TK-Gerät in der Hand hält, dürfte nämlich in der Regel die wahrscheinlichste sein. Es kann aber auch von Vorteil sein, beispielsweise bei einem häufig oder ständig in einem Fahrzeug installierten TK-Endgerät beispielsweise den zur Betriebssituation B3 gehörenden Parametersatz als voreingestellten Startwert zu laden.

Besonders bevorzugt ist auch eine Ausführungsform des erfindungsgemäßen Verfahrens, bei der die Einrichtung zur Kompensation akustischer Echos ein adaptives Filter umfasst, welches den als Startwert geladenen Parametersatz, insbesondere durch entsprechende Veränderung der Filterkoeffizienten, ständig an die aktuelle akustische Umgebungssituation des TK-Endgeräts anpasst.

Im realen Betrieb wird die akustische Impulsantwort durch kleinste Änderungen in der Lage des Gerätes oder umgebender Gegenstände beeinflusst. Daher ist es zweckmäßig und vorteilhaft, einen automatisch weiter adaptierenden Algorithmus für die Filterkoeffizienten laufen zu lassen, um Restechos ständig auf ein Minimum abgleichen zu können. Der Vorteil hierbei besteht darin, dass der Algorithmus die Koeffizienten nicht von einem Satz "Null" ausgehend berechnen muss, sondern dass er sich durch die Voreinstellung viel schneller auf eine neue Betriebsart einstellen kann und auch für diese Situation viel schneller einen Feinabgleich erreicht.

Bei einer besonders vorteilhaften Variante dieser Ausführungsform wird zumindest ein Teil der angepassten Parametersätze während des Betriebs des TK-Endgeräts in einem Lernspeicher abgespeichert und bei späteren Anwendungen wieder eingesetzt.

Es ist sehr vorteilhaft die Parametersätze, deren Produkt aus "Qualitätsmaß mal zeitlicher Dauer" einen bestimmten Schwellwert überschreitet, für eine weitere Verwendung zwischenzuspeichern. Diese Parametersätze können später in einem Lernprozess dazu dienen, die vorab gespeicherten Parametersätze langsam zu verbessern. Ein solcher Lernprozess kann zum einen eine Alterung kritischer Komponenten wie Lautsprecher, Mikrofon, etc. aber genauso Streuungen der Parameter kritischer Komponenten in der Produktion zumindest teilweise auffangen bzw. kompensieren.

Bei einer weiteren vorteilhaften Ausgestaltung ist vorgesehen, dass die Einrichtung zur Kompensation akustischer Echos mindestens zwei adaptive Filter umfasst, von denen eines zur momentanen Kompensation akustischer Echos und ggf. als Referenz, das bzw. die anderen jeweils zur Suche nach einem zur Kompensation akustischer Echos besser geeigneten Satzes von Filterkoeffizienten eingesetzt werden, und dass bei Auffinden eines besseren Satzes von Filterkoeffizienten dieser zur weiteren Kompensation akustischer Echos eingesetzt wird. Bei Verwendung von zwei Filtern kann das erste Filter ständig nach einem in der momentanen Qualität besseren Filterkoeffizientensatz suchen und falls ein solcher gefunden wird, diesen in das zweite Filter laden, das zur Kompensation der Echos eingesetzt wird.

Eine weitere Verbesserung lässt sich dadurch erreichen, dass die jeweilige zeitliche Verweildauer eines Satzes von Filterkoeffizienten im Einsatz zur Kompensation akustischer Echos gemessen, die Verweildauern unterschiedlicher Sätze von Filterkoeffizienten statistisch ausgewertet und die Sätze von Filterkoeffizienten mit den längsten Verweildauern als für die entsprechende Betriebssituation besonders angepasste Parametersätze in einem Lernspeicher abgespeichert werden.

Die Parametersätze können z.B. nach der Größe des Restechos in ihrer Qualität beurteilt werden. Das allein reicht aber nicht aus, weil die zeitliche Dauer, für die ein Parametersatz besonders gut ist (mittlere Lebensdauer) dabei nicht berücksichtigt ist. Daher ist es von Vorteil, die Parametersätze nach ihrem Produkt aus "Qualität mal zeitlicher Dauer" zu bewerten und nur diejenigen mit dem größten Wert für den Lernprozess weiter zu verwerten.

Die oben beschriebene Verfahrensvariante kann daher noch dadurch verfeinert werden, dass die mit der jeweiligen Verweildauer gewichteten Sätze von Filterkoeffizienten im Lernspeicher abgespeichert werden.

Schließlich kann auch eine erhebliche Verbesserung einer Ausführungsform der erfindungsgemäßen Verfahrens erzielt werden, bei der die Lautstärke am Lautsprecher des TK-Endgeräts automatisch in Abhängigkeit von der jeweiligen aktuellen Betriebssituation (Bj) eingestellt wird.

In den Rahmen der vorliegenden Erfindung fällt auch eine Servereineit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine beispielsweise in TK-Endgeräten oder Telefonanlagen implementiert werden.

Des weiteren fällt in den Rahmen der vorliegenden Erfindung auch eine Einrichtung für die Kompensation akustischer Echos zwischen Lautsprecher und Mikrophon eines schnurlosen TK-Endgeräts, die einen Signaleingang für das am Lautsprecher ankommende und einen weiteren Signaleingang für das aus dem Mikrophon abgehende TK-Signal aufweist, und bei der ein Prozessor vorgesehen ist, der mittels eines Algorithmus unter Berücksichtung der Signale an seinen beiden Signaleingängen Korrektursignale zur Kompensation akustischer Echos errechnen kann, die von der Einrichtung auf die vom Mikrophon abgehende TK-Leitung gegeben werden können. Diese zeichnet sich erfindungsgemäß dadurch aus, dass der Prozessor Anschluss an eine Speichereinheit mit den abgespeicherten Parametersätzen (Pi) hat, aus der er einen ausgewählten Parametersatz (Pj) laden und damit die Berechnung der Korrektursignale zur Kompensation akustischer Echos durchführen kann.

Vorzugsweise enthält die erfindungsgemäße Einrichtung mindestens ein adaptives Filter, vorzugsweise ein FER (=Finite Impulse Response)-Filter zur Berechnung der Korrektursignale.

Besonders bevorzugt ist bei der erfindungsgemäßen Einrichtung als Zusatz nach einem adaptiven Filter ein Expander oder ein Kompander vorgesehen. Das Kompander-Verfahren ist beispielsweise aus der DE 42 29 912 A1 bekannt. Damit kann eine Geräuschabsenkung vorgenommen werden, deren Grat gemäß einer fest vorgenommenen Transferfunktion bestimmt wird.

Der Kompander hat zunächst die Eigenschaft, Sprachsignale mit einem bestimmten, vorab eingestellten "normalen Sprachsignalpegel" praktisch unverändert von seinem Eingang zum Ausgang zu übertragen. Wird nun aber das Eingangssignal einmal zu laut, z.B. weil ein Sprecher zu dicht an sein Mikrofon kommt, so begrenzt ein Dynamik-Kompressor den Ausgangspegel auf nahezu den gleichen Wert wie im Normalfall, indem die aktuelle Verstärkung im Kompander mit zunehmender Eingangslautstärke linear abgesenkt wird. Durch diese Eigenschaft bleibt die Sprache am Ausgang des Kompandersystems etwa gleich laut - unabhängig davon wie stark die Eingangslautstärke schwankt. Wird nun andererseits ein Signal mit einem Pegel, der kleiner als der Normalpegel ist, auf den Eingang des Kompanders gegeben, so wird das Signal zusätzlich gedämpft, indem die Verstärkung zurückgeregelt wird, um Hintergrundgeräusche möglichst nur abgeschwächt zu übertragen. Ferner kann der Expander/Kompander im Signal enthaltene Restechos sehr gut eliminieren und damit kurzzeitige Fehlfunktionen des vorgeschalteten adaptiven Filters korrigieren.

Bevorzugt ist auch eine Ausführungsform der erfindungsgemäßen Einrichtung, bei der zur Kompensation akustischer Echos Schreib- und Lesezugriff auf einen Lernspeicher möglich ist, in welchem verbesserte Parametersätze abgespeichert werden können.

Um eine manuelle Eingabe der Betriebssituation Bⱼ zu ermöglichen, ist bei Ausführungsformen vorgesehen, dass die Einrichtung zur Kompensation akustischer Echos an eine am TK-Endgerät angeordnete Eingabeeinheit, insbesondere einen Schalter, beispielsweise einen Druckknopf zur Eingabe der in Schritt (c) ausgewählten aktuellen Betriebssituation (Bj) angeschlossen ist.

Um die oben beschriebene automatische Durchführung der Auswahl der aktuellen Betriebssituation in Schritt (c) zu ermöglichen, ist bei einer bevorzugten Ausführungsform der erfindungsgemäßen Vorrichtung vorgesehen, dass die Einrichtung zur Kompensation akustischer Echos an mindestens einen am TK-Endgerät angeordneten Sensor angeschlossen ist, der für die aktuelle physikalische Umgebung des TK-Endgeräts charakteristische Daten zur Bestimmung der aktuellen Betriebssituation (Bj) liefern kann.

Insbesondere kann der Sensor ein Berührungssensor sein, mit welchem festgestellt werden kann, welcher Situation, insbesondere in welcher Lage sich das TK-Endgerät befindet.

So kann der Sensor auf Druck und/oder auf elektrische Leitfähigkeit empfindlich sein und damit feststellen, ob der Benutzer das TK-Endgerät in der Hand hält oder ab es beispielsweise auf einem Tisch steht oder liegt.

Vorteilhafterweise kann das TK-Endgerät mit der erfindungsgemäßen Vorrichtung eine Quaderform aufweisen, wobei eine der beiden gegenüberliegenden größten Flächen, die durch vier kleinere Seitenflächen miteinander verbunden sind, die Bedienseite des TK-Endgeräts mit der Eingabeeinheit für die Rufnummern ist und wobei mindestens ein Sensor an jeder der beiden Längsseiten angeordnet ist, und die genaue Lage des TK-Endgeräts auf einer Unterlage (stehen oder liegen, Lautsprecher nach oben oder zur Unterlage gerichtet usw.) ermitteln zu können.

Vorteilhaft kann auch eine Ausführungsform der Erfindung sein, bei der der Sensor mechanische und/oder elektrische Schalter zur Erkennung einer Einbausituation des TK-Endgeräts, beispielsweise in einer Fahrzeug-Halterung oder in einem Gestell bzw. an einem Bügel zur Aufstellung des TK-Endgeräts auf einer Unterlage aufweist. Dadurch kann ohne manuelle Bedienung beispielsweise sofort auf eine Variante des Betriebsverfahrens umgeschaltet werden, bei der als Startwert ein zur Betriebssituation B3 gehörender Parametersatz geladen wird.

Schließlich kann in der erfindungsgemäßen Vorrichtung ein Infrarot-Sensor eingebaut sein, mit dem unter anderem der Abstand des TK-Endgeräts vom Benutzer bzw. zu einer Schall-reflektierenden Wand ermittelt und entsprechende Parameter zu der zugehörigen Betriebssituation automatisch ermittelt werden können.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: ein Schema der Funktionsweise einer Einrichtung zur Durchführung einer ersten, einfachen Variante des erfindungsgemäßen Verfahrens;
- Fig. 2: eine zweite Variante der Erfindung mit Lernspeicher;
- Fig. 3: eine dritte Variante der Erfindung mit zwei parallelen FIR-Filtern; und
- Fig. 4: eine vierte Variante der Erfindung mit Kompander/Expander.

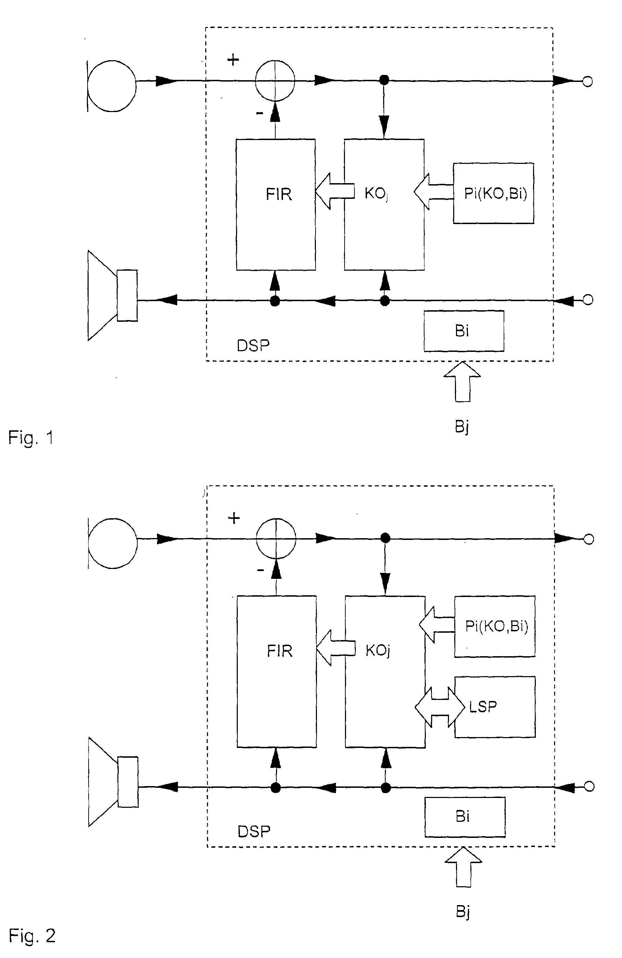

In dem Funktionsschema von Fig. 1 ist ein digitaler Signalprozessor DSP gestrichelt dargestellt, der einerseits an ein TK-Endgerät angeschlossen ist, welches in der Zeichnung mit einem Mikrofon- und einem Lautsprechersymbol repräsentiert ist, andererseits eine ankommende und abgehende Signalleitung in ein nicht näher dargestelltes TK-Netz aufweist.

Außer den vier ein- bzw. ausgehenden Signalleitungen ist, angedeutet durch einen Pfeil, auch eine Eingabemöglichkeit für eine aktuelle Betriebssituation Bⱼ des TK-Endgeräts am digitalen Signalprozessor DSP vorgesehen. Diese Eingabe der aktuellen Betriebssituation Bⱼ kann entweder per Hand oder durch (in der Zeichnung nicht dargestellte) Sensoren automatisch erfolgen. Aufgrund der entsprechenden Eingabe wird aus einem Speicher aus einer Anzahl von definierten, vorgegebenen verschiedenen Betriebssituationen Bᵢ die der aktuellen Betriebssituation Bⱼ am ehesten entsprechende Betriebssituation ausgewählt. Aus einem Speicher für Parametersätze Pⱼ, die jeweils einer Betriebssituation Bᵢ eindeutig zugeordnet sind, wird nun der entsprechende Parametersatz Pⱼ (Bⱼ) ausgewählt und in einen Speicher für Filterkoeffizienten KO eingegeben. Aufgrund dieses eingegebenen Parametersatzes Pⱼ wird ein diesem entsprechender Filterkoeffizientensatz KOⱼ ausgewählt, welcher einem FIR(= Finite Impulse Response)-Filter zugeführt wird.

Im FIR-Filter wird nach einem Algorithmus (z. B. NLMS = Normalized Least Mean Square oder RLMS = Recursive Least Mean Square) mit Hilfe der eingegebenen Filterkoeffizienten KOⱼ ein Korrekturwert für das vom Mikrofon abgehende TK-Signal errechnet und mit diesem Korrekturwert das abgehende Signal beaufschlagt. Auf diese Weise können akustische Echos zwischen Lautsprecher und Mikrofon wirksam kompensiert oder zumindest auf ein erträgliches Maß reduziert werden.

In der Ausführungsform nach Fig. 2 werden für den Fall, dass bei dem vom Mikrofon abgehenden Signal ein sehr guter Rauschabstand (S/N) vorliegt, die hinsichtlich der Echoreduktion (gemessen in dB) als "besonders gut" bewerteten Sätze von Filterkoeffizienten KOⱼ(Bⱼ) für den jeweiligen Betriebsmodus Bⱼ sowie gegebenenfalls weitere charakterisierende Parameter in einem Lernspeicher LSP abgespeichert. Zusätzlich kann auch die Zeitdauer tⱼ, für die der Algorithmus den jeweiligen Koeffizientensatz KOⱼ als "sehr gut" bewertet hat mit abgespeichert werden. Spätestens am Ende jedes Gesprächs wird eine erste statistische Auswertung der im Lernspeicher LSP abgelegten Koeffizientensätze KOᵢ vorgenommen. Dabei wird geprüft, a) welches die besten Filterkoeffizientensätze KOᵢ(Bᵢ) sind, b) über welche Zeitdauer tᵢ diese Filterkoeffizientensätze KOᵢ(Bᵢ) jeweils eingesetzt waren, und c) wie groß das Hintergrundgeräusch (bzw. der Rauschabstand S/N) bei jedem dieser Filtersätze war, da für die weitere Auswertung nur die besten Filterkoeffizientensätze KO bei möglichst gutem Rauschabstand verwendet werden sollen.

Sodann werden die im Lernspeicher LSP abgespeicherten ausgewählten Filterkoeffizientensätze KOᵢ(Bᵢ) in einer neuen Reihenfolge geordnet nach dem größten Produkt aus einem Qualitätsmaß (beispielsweise abhängig von der Größe der Echoreduktion in dB) mal der Zeitdauer tᵢ für einen bestimmten Betriebsmodus B; (oder einen entsprechenden Untermodus). Dieses Produkt wird verglichen mit dem Produkt des für den gleichen Betriebsmodus Bᵢ ursprünglich geladenen Koeffizientensatzes KOᵢ(Bᵢ). Ist das neue Produkt größer als das abgespeicherte, so wird der ursprüngliche Koeffizientensatz KOᵢ(Bᵢ) durch den neuen Koeffizientensatz ersetzt. Auf diese Weise wird dem Gerät eine Art Lernvermögen beigebracht. Es kann damit erreicht werden, dass das TK-Endgerät sich einem neuen Betriebszustand dadurch besser anpassen kann, dass die Anfangseinstellung des FIR-Filters über den eingegebenen Koeffizientensatz KOⱼ(Bⱼ) möglichst gut mit den am häufigsten vorkommenden Situationen übereinstimmt.

Behält man bis zu etwa drei leicht unterschiedliche Koeffizientensätze im Lernspeicher LSP für jede der definierten Betriebsmoden Bᵢ, so lassen sich auch die jeweils besten Messwerte über mehrere Gespräche miteinander vergleichen und damit die jeweils günstigste Anfangseinstellung für die Filterkoeffizientensätze KO aus mehreren Gesprächen ermitteln.

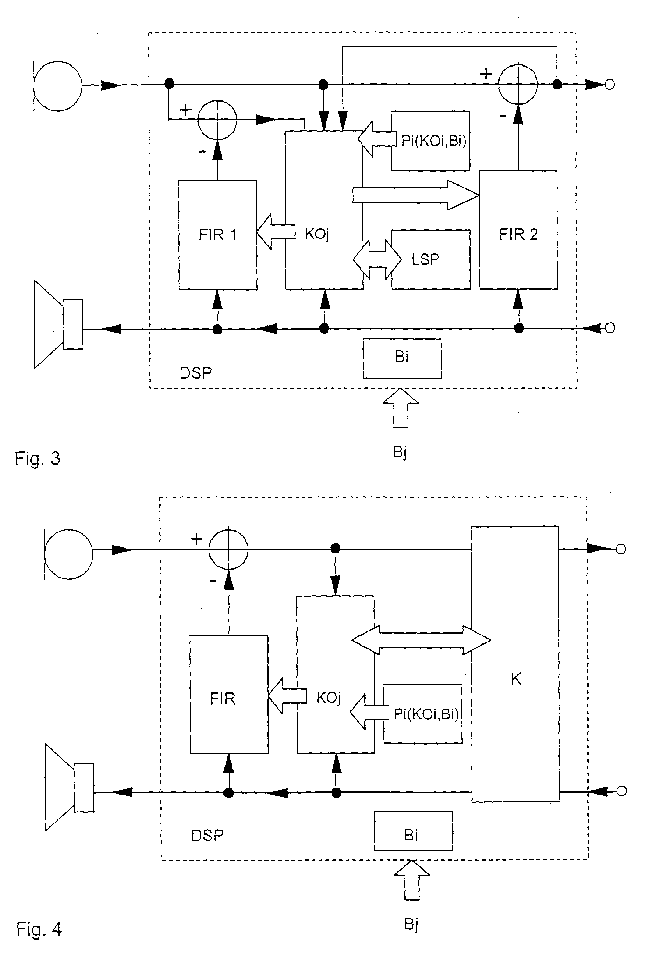

In Fig. 3 ist zusätzlich zu der Ausführungsform nach Fig. 2 noch ein weiteres adaptives Filter vorgesehen. Das Filter FIR 2 dient der momentanen Kompensation akustischer Echos und gegebenenfalls als Referenz, während das Filter FIR 1 jeweils zur Suche nach einem zur Kompensation akustischer Echos besser geeigneten Satz von Filterkoeffizienten KO eingesetzt wird. Bei Auffinden eines besseren Satzes von Filterkoeffizienten wird dieser sofort zur weiteren Kompensation akustischer Echos im Filter FIR 2 eingesetzt.

Die Ausführungsform nach Fig. 4 schließlich umfasst zusätzlich zu einem adaptiven Filter einen Kompander K oder einen Expander gemäß dem bekannten Stand der Technik. Die Vorteile des Einsatzes einer Kompander-Einheit hinsichtlich der Geräuschreduktion wurden bereits oben diskutiert. Insbesondere im Zusammenwirken mit einem FIR-Filter, welches den Rauschabstand S/N auf einen Wert nahe 0 dB reduziert, kann die Kombination mit einem Kompander eine Echounterdrückung bis zu 50 dB bewirken.

Selbstverständlich sind auch noch vielfältige weitere Kombinationen von Merkmalen der oben beschriebenen Ausführungsformen möglich und für spezielle Einsatzfälle von besonderem Vorteil.

## Patentansprüche

1. Verfahren zum Betrieb eines schnurlosen Telekommunikations (=TK)-Endgeräts, insbesondere eines Mobiltelefons, mit einer Einrichtung zur Kompensation akustischer Echos zwischen Lautsprecher und Mikrophon des TK-Endgeräts,
**gekennzeichnet durch** folgende Schritte:
(a) Definieren von verschiedenen Betriebssituationen (Bi) des TK-Endgeräts;
(b) Ermitteln von Parametersätzen (Pi) für die Kompensation akustischer Echos für jede Betriebssituation (Bi) und Abspeichern in einer Speichereinheit, auf die das TK-Endgerät Zugriffsmöglichkeit hat;
(c) Auswahl der aktuellen Betriebssituation (Bj) nach Einschalten des TK-Endgeräts oder bei einem Wechsel der Betriebssituation
(d) Laden des zur aktuellen Betriebssituation (Bj) gehörenden Parametersatzes (Pj) aus der Speichereinheit in die Einrichtung zur Kompensation akustischer Echos und Durchführen der Echokompensation mit dem geladenen Parametersatz (Pj) als Startwert.

2. Verfahren nach Anspruch 1, **dadurch gekennzeichnet, dass** in Schritt (a) drei übergeordnete Betriebssituationen (Bi) definiert werden, nämlich:
B1 : TK-Endgerät wird vom Benutzer in der Hand gehalten;
B2 : TK-Endgerät liegt oder steht auf einer festen Unterlage;
B3 : TK-Endgerät ist in einer Halterung fixiert.

3. Verfahren nach einem der vorhergehenden Ansprüche, **dadurch gekennzeichnet, dass** in Schritt (b) zumindest ein Teil der Parametersätze (Pi) experimentell, vorzugsweise durch Messung des Betriebsverhaltens eines TK-Endgeräts in den in Schritt (a) bzw. (a1) definierten Betriebssituationen ermittelt wird.

4. Verfahren nach Anspruch 3, **dadurch gekennzeichnet, dass** Parametersätze (Pi) durch Messungen an verschiedenen TK-Endgeräten vergleichbaren, zumindest ähnlichen Typs und anschließende Mittelung über die gewonnenen Messwerte ermittelt werden.

5. Verfahren nach einem der vorhergehenden Ansprüche, **dadurch gekennzeichnet, dass** die Auswahl der aktuellen Betriebssituation (Bj) in Schritt (c) automatisch erfolgt, und dass die aktuelle physikalische Umgebungssituation des TK-Endgeräts mittels einer Sensoreinrichtung festgestellt und zur automatischen Auswahl der Betriebssituation (Bj) ausgewertet wird.

6. Verfahren nach einem der vorhergehenden Ansprüche, **dadurch gekennzeichnet, dass** mehrere, vorzugsweise alle in Schritt (b) abgespeicherten Parametersätze nacheinander oder parallel geladen werden und damit jeweils eine Kompensation akustischer Echos durchgeführt wird, dass die Ergebnisse der verschiedenen Echokompensationen miteinander verglichen werden, und dass der Parametersatz mit dem besten Ergebnis zur weiteren Kompensation akustischer Echos ausgewählt wird.

7. Verfahren nach den Ansprüchen 5 und 6, **dadurch gekennzeichnet, dass** als Startwert in Schritt (d) unabhängig von der aktuellen Betriebssituation (Bj) ein beliebiger der gespeicherten Parametersätze (Pi) geladen wird.

8. Verfahren nach einem der vorhergehenden Ansprüche, **dadurch gekennzeichnet, dass** die Einrichtung zur Kompensation akustischer Echos ein adaptives Filter (FIR) umfasst, welches den als Startwert geladenen Parametersatz, insbesondere durch entsprechende Veränderung der Filterkoeffizienten (KO), ständig an die aktuelle akustische Umgebungssituation des TK-Endgeräts anpasst.

9. Verfahren nach Anspruch 8, **dadurch gekennzeichnet, dass** die Einrichtung zur Kompensation akustischer Echos mindestens zwei adaptive Filter (FIR 1, FIR 2) umfasst, von denen eines (FIR 1) zur momentanen Kompensation akustischer Echos und ggf. als Referenz, das bzw. die anderen (FIR 2) jeweils zur Suche nach einem zur Kompensation akustischer Echos besser geeigneten Satzes von Filterkoeffizienten (KO) eingesetzt werden, und dass bei Auffinden eines besseren Satzes von Filterkoeffizienten dieser zur weiteren Kompensation akustischer Echos eingesetzt wird.

10. Verfahren nach einem der vorhergehenden Ansprüche, **dadurch gekennzeichnet, dass** die Lautstärke am Lautsprecher des TK-Endgeräts automatisch in Abhängigkeit von der jeweiligen aktuellen Betriebssituation (Bj) eingestellt wird.

11. Einrichtung zur Durchführung des Verfahrens nach einem der Ansprüche 1 bis 10 für die Kompensation akustischer Echos zwischen Lautsprecher und Mikrophon eines schnurlosen TK-Endgeräts, die einen Signaleingang für das am Lautsprecher ankommende und einen weiteren Signaleingang für das aus dem Mikrophon abgehende TK-Signal aufweist, und bei der ein Prozessor vorgesehen ist, der mittels eines Algorithmus unter Berücksichtung der Signale an seinen beiden Signaleingängen Korrektursignale zur Kompensation akustischer Echos errechnen kann, die von der Einrichtung auf die vom Mikrophon abgehende TK-Leitung gegeben werden können, **dadurch gekennzeichnet, dass** der Prozessor Anschluss an eine Speichereinheit mit den abgespeicherten Parametersätzen (Pi) hat, aus der er einen ausgewählten Parametersatz (Pj) laden und damit die Berechnung der Korrektursignale zur Kompensation akustischer Echos durchführen kann.

12. Vorrichtung nach Anspruch 11, **dadurch gekennzeichnet, dass** mindestens ein adaptives Filter, vorzugsweise ein FIR-Filter (FIR; FIR 1, FIR 2) zur Berechnung der Korrektursignale und/oder ein Expander oder ein Kompander (K) vorgesehen ist.

13. Vorrichtung nach einem der Ansprüche 11 oder 12, **dadurch gekennzeichnet, dass** die Einrichtung zur Kompensation akustischer Echos an eine am TK-Endgerät angeordnete Eingabeeinheit, insbesondere einen Schalter, beispielsweise einen Druckknopf zur Eingabe der in Schritt (c) ausgewählten aktuellen Betriebssituation (Bj) angeschlossen ist.

14. Vorrichtung nach einem der Ansprüche 11 bis 13, **dadurch gekennzeichnet, dass** die Einrichtung zur Kompensation akustischer Echos an mindestens einen am TK-Endgerät angeordneten Sensor angeschlossen ist, der für die aktuelle physikalische Umgebung des TK-Endgeräts charakteristische Daten zur Bestimmung der aktuellen Betriebssituation (Bj) liefern kann.

15. Vorrichtung nach Anspruch 14, **dadurch gekennzeichnet, dass** der Sensor mechanische und/oder elektrische Schalter zur Erkennung einer Einbausituation des TK-Endgeräts, beispielsweise in einer Fahrzeug-Halterung oder in einem Gestell bzw. an einem Bügel zur Aufstellung des TK-Endgeräts auf einer Unterlage aufweist.
